# EUROPEAN PATENT SPECIFICATION

(11) **EP 3 095 540 B1**
(45) Date of publication and mention of the grant of the patent: **06.03.2019**
(21) Application number: 15752366.3
(22) Date of filing: 15.02.2015
(51) Int. Cl.: B22F 9/04, B22F 1/00, H01G 9/052, C22F 1/18

(54) **METHOD FOR PREPARING TANTALUM POWDER FOR HIGH-RELIABILITY, HIGH SPECIFIC CAPACITY ELECTROLYTIC CAPACITOR**
VERFAHREN ZUR HERSTELLUNG VON TANTALPULVER FÜR HOCHZUVERLÄSSIGEN ELEKTROLYTKONDENSATOR MIT HOCHSPEZIFISCHER KAPAZITÄT
PROCÉDÉ DE PRÉPARATION D'UNE POUDRE DE TANTALE POUR CONDENSATEUR ÉLECTROLYTIQUE DE FIABILITÉ ÉLEVÉE ET DE CAPACITÉ SPÉCIFIQUE ÉLEVÉE

(30) Priority: 21.02.2014 CN 201410058096
(43) Date of publication of application: 23.11.2016
(73) Proprietor: Ningxia Orient Tantalum Industry Co., Ltd., Shizuishan, Ningxia 753000 (CN)
(72) Inventor: LI, Zhongxiang, Shizuishan Ningxia 753000 (CN); CHENG, Yuewei, Shizuishan Ningxia 753000 (CN); SHI, Dejun, Shizuishan Ningxia 753000 (CN); DONG, Xuecheng, Shizuishan Ningxia 753000 (CN); WANG, Ting, Shizuishan Ningxia 753000 (CN); WANG, Zhidao, Shizuishan Ningxia 753000 (CN); WEI, Junxiang, Shizuishan Ningxia 753000 (CN)
(74) Representative: Style, Kelda Camilla Karen
(86) International application number: PCT/CN2015/073090
(87) International publication number: WO 2015/124094

(56) References cited:
- CN-A- 1 899 730
- CN-A- 101 010 160
- CN-A- 101 491 834
- CN-A- 102 719 720
- CN-B- 102 151 839
- US-A- 5 211 741
- US-A1- 2006 070 492
- US-A1- 2007 068 341
- LEI Z ET AL: "Nanocrystalline scandia-doped zirconia (ScSZ) powders prepared by a glycine-nitrate solution combustion route", JOURNAL OF THE EUROPEAN CERAMIC SOCIETY, ELSEVIER SCIENCE PUBLISHERS, BARKING, ESSEX, GB, vol. 26, no. 4-5, 19 August 2005 (2005-08-19), pages 397-401, XP024960502, ISSN: 0955-2219, DOI: 10.1016/J.JEURCERAMSOC.2005.06.007 [retrieved on 2006-01-01]

## Description

### Technical field

The present invention belongs to the field of rare metal smelting, relates to a processing technique of tantalum powders, particularly to a process for preparing tantalum powders, by means of using sodium-reduced tantalum powders with high specific surface area as raw materials, which is used in an electrolytic capacitor with high reliability and high specific capacitance.

### Background Art

Tantalum powders are mainly used for manufacturing solid electrolytic capacitors with high reliability, and widely used in a plurality of industries such as mobile phones, computers and et al. When tantalum metal is used as an anode material of an electrolyte capacitor, the finer the powder is, and thus the larger the specific surface area is, and thereby the higher the specific capacitance is. With the development of electronic products towards miniaturization and microminiaturization, tantalum capacitors are continuously required to increase capacity and reduce equivalent series resistance (ESR). In order to further increase the capacity of tantalum capacitors and maintain good leakage current, small ESR and high reliability, basic properties of tantalum powders should be improved. It is well known that the chemical composition and physical structure of tantalum powders affect the performance of final tantalum electrolytic capacitors, including leakage current, ESR and reliability. At present, one of the challenges faced is to produce tantalum powders having high specific capacitance, high sintering resistance and high voltage endurance.

It is well known that, most of tantalum powders that are mass produced are obtained by chemical reaction of potassium fluorotantalate with sodium in a reactor. During this process, the physical properties of tantalum powders, e.g. particle size and specific surface area of tantalum powders, are regulated by controlling the condition of reduction reaction, for example, the ratio of KCI which is dilution salt that does not take part in the reaction or KF. By adjusting the reduction condition, the tantalum powder becomes fine, the specific surface area thereof is increased. The tantalum powders obtained by this process are porous agglomerates with high specific surface area, which are formed by collection of many fine primary particles, and have complex structure and large specific surface area. Generally, due to large specific surface area, the above tantalum powders have high specific capacitance, correspondingly the breakdown voltage thereof is low, and the voltage endurance and reliability are poor. Thus such tantalum powders are difficult to work at high voltage. In order to obtain tantalum powders with high reliability and high voltage endurance, it is necessary to obtain a tantalum powder with simple particle formation by changing the structure and morphology of primary particles.

Tantalum flake powder is a kind of tantalum powder in which primary particles are flaky. If observed under three-dimensional view, the size of tantalum flake powder is smaller in one dimension than in the other two dimensions, i.e. the tantalum flake powder exhibits a certain flattening or has a certain radius-thickness ratio. This type of tantalum powders are generally obtained by milling other tantalum powders into flake powders, followed by subsequent processing step such as deoxidation, and thermal agglomeration. As compared to reduced powders, such tantalum powders have smaller specific surface area, simple particle formation, and lower specific capacitance.

At present, a process for preparing tantalum flake powders, which is well known in the art, is to mill, in a ball mill, the granular tantalum powders (e.g. sodium-reduced tantalum powders or EB powders obtained by hydrogenated powdering following electron impacting ingot (i.e., electron impacted powders)) are milled so that they become flaky. In order to reduce pollution and oxidization, tantalum particles are milled in an organic solvent, and then purified by acid washing. The unique surface area and final specific capacitance of tantalum flake powders depend on the thickness and size of the flake. The finer and smaller the flake is, and the larger the specific surface area is, and the higher the specific capacitance is.

In order to obtain thinner and finer flakes, the most direct way is to extend milling time, the particle size of tantalum powders is gradually reduced as time extends, but not reduced unlimitedly. When the tantalum powders are milled to a certain particle size, opposite effect will appear to prevent the particle size from continuously reducing, but the particle size will increase contrarily. The reasons of this phenomenon is that, since materials are continuously squashed and crushed during ball milling, more and more chemical bonds are broken, and unsaturated bonds form on the surface of materials, thereby many fresh free surfaces are formed. The particle inside the materials interacts with surrounding particles, the energy thereof is thus in balanced state. However, the force exerted inwardly on the particles located in the surface layer is strong, but the force exerted outwardly on those particles is extremely weak, thereby, the overplus bond energy (i.e. surface free energy) exists on the particles located in the surface layer of materials. The smaller the particle size is, the larger the specific surface area thereof is, and also the larger the surface free energy thereof is. Seen from thermodynamic viewpoint, because of the unsaturated bonds existing on the surface of particles, the surrounding particles are necessarily adsorbed to the surface in order to compensate the unsaturated bonds and reduce the surface free energy, thus a cohesive force is formed among the particles of materials so as to make broken chemical bonds re-aggregate. Therefore, the phenomenon appears that the particle size of the materials does not reduce but increase, after the materials are milled to a certain extent. Moreover, in order to increase the specific surface area, the tantalum powders are excessively milled to obtain the flaky tantalum particles, which results in loss of some properties, for example, poor flowability, low crush strength, sensitivity to temperature, poor sintering resistance, and low voltage endurance. In addition, with the extension of milling time, the content of metal impurities will be increased, and the production cost will be increased.

US5580367 discloses improved tantalum flake powders and a process for producing tantalum flake powders. The process for producing tantalum flake powders is that big tantalum flake powders are prepared by above traditional processes, then subjected to hydrogenation, and then crushed by mechanical crushing to reduce the size thereof. The object of the process is to improve the flowability, crush strength and moldability of tantalum powders, however, the contribution of the process to increase capacitance value (CV/g) is small. Furthermore, due to high hardness of hydrogenated materials, a great amount of metal impurities are introduced during subsequent crushing, thereby the impurities content of final products is high. Because hydrogenation is required during the treatment process, and hydrogen belongs to a hazardous chemical, hidden danger of hydrogen catching fire or exploding may be present during the production.

CN101491834A discloses a tantalum powder and process of preparing the same and anode of electrolytic capacitor prepared with the tantalum powder. In the preparing process, the tantalum powders are produced by reducing tantalum compound with a reductant, which is characterized in that milled tantalum flake powders as crystal seeds are added during reduction. The object of the process is to prepare tantalum powders with excellent performance such as high specific capacitance and high voltage endurance. The characteristic of the tantalum powders is that the voltage endurance and sintering resistance are better than those of sodium-reduced tantalum powders, but the capacitance (CV/g) has no advantage. As compared with pure tantalum flake powders, the tantalum powders have no advantages in leakage current, breakdown voltages, sintering resistance and voltage endurance, etc.

In summary, in the prior art, the process for preparing tantalum powders for use in electrolytic capacitors with high reliability and high specific capacitance has following defects: (1) as the requirements for specific capacitance become higher and higher, by using traditional production processes of tantalum flake powders, the production of tantalum powders having higher specific capacitance are restricted. (2) By using the process that tantalum flake powders are prepared firstly, then subjected to hydrogenation, and then crushed, there are some restrictions in practical application due to the complex technological process, long process scheme, and high production cost. Moreover, during hydrogenation, the content of hydrogen cannot be controlled easily, requirements for the selection of subsequent crushing manner is high, and the content of
metal impurities is high, and hidden danger of hydrogen catching fire or exploding may be present during the production.

Hence, the object of the present invention is to provide a process for preparing tantalum powders for use in an electrolytic capacitor with high reliability and high specific capacitance. The process is simple and has strong controllability, and has low security risk during production. The process can be used for producing tantalum flake powders having high specific surface area. The tantalum flake powders obtained can be further processed to obtain tantalum powders for use in an electrolytic capacitor with high reliability and high specific capacitance, and have good flowability and moldability, have high specific capacitance, and when used under high voltage, have low leakage current and high breakdown voltage.

US2007/068341A1 discloses a method for spherically granulating and agglomerating metal particles such as tantalum and/or niobium powders is described in the present invention, which includes the steps of: a). comminuting the metal particles to form fine particles having D50 less than 50 µm; b). granulating the comminuted metal particles comprising volatile liquid, for example, tantalum and/or niobium particles comprising volatile liquid, to form wet spherical particles; c). still drying the wet spherical particles and removing volatile liquid to form flowable pre-agglomerated particles with increased bulk density; d). heat treating the pre-agglomerated particles; e). screening the heat treated powder to obtain the flowable agglomerated particles.

US2006/070492A1 discloses methods of maximizing a tantalum capacitor's capacitance are disclosed, as well as tantalum flake powder and anodes. A two step milling process can be used to mill tantalum particles into tantalum flake powder having flakes of the desired thickness. This flake powder can then be pressed and sintered thereby forming an anode. Other flake capacitance methods and products are also described.

LEI Z et al: "Nanocrystalline Scandia-doped zirconia (ScSZ) powders prepared by a glycine-nitrate solution combustion route", JOURNAL OF THE EUROPEAN CERAMIC SOCIETY, ELSEVIER SCIENCE PUBLISHERS, BARKING, ESSEX, GB, vol. 26, no. 4-5, 19 August 2005, pages 397-401, XP024960502, ISSN: 0955-2219, DOI: 10.1016/J.JEURCERAMSOC. 2005.06.007 discloses nanocrystalline Scandia doped zirconia powders synthesized by a solution combustion route using glycine, zirconyl nitrate and Scandia as the starting materials.

CN102151839B discloses a ThO2-containing nickel-base binding phase superfine metal ceramic powder and a preparation method and application thereof.

### Summary of the invention

The present invention provides a process for preparing tantalum powders for use in an electrolytic capacitor with high reliability and high specific capacitance. In order to achieve the aim that tantalum flake powders have low leakage current and high breakdown voltage, and also have high specific capacitance, the inventors have found that if the particle size of raw tantalum powders used for preparing tantalum flake powders is controlled, the particle formation of product tantalum powders can be improved, the impurities of product tantalum powders can be controlled, thereby the capacitance value (CV/g) of product tantalum powders can be increased, and comprehensive properties of product tantalum powders, including leakage current and breakdown voltage, can be improved, thus tantalum flake powders for use in an electrolytic capacitors with high reliability and high specific capacitance can be obtained.

In a first aspect, the present invention provides a process for preparing tantalum powders for use in an electrolytic capacitor wherein said tantalum powder is a tantalum flake powder having a content of metal impurities ΣFe+Ni+Cr<60ppm and a content of C <60ppm and having a tantalum flake powder, wherein the content of metal impurities ΣFe+Ni+Cr<60ppm, the content of C <60ppm; the specific capacitance value thereof is 5000-60000 µF•V/g at a formation voltage of 50-270 V comprising the steps of:
1) preparation of raw tantalum powders: providing raw tantalum powders having suitable average particle size according to the requirement for target average particle size of tantalum flake powders, wherein the ratio of the average particle size of raw tantalum powders to the average particle size of tantalum flake powders is 2-5.
2) preparation of tantalum flake powders: processing the raw tantalum powders into flaky shape to obtain tantalum flake powders, preferably with a processing method comprising: ball milling, pounding or squashing, more preferably with ball milling;
3) removal of impurities by acid washing: acid washing the tantalum flake powders obtained in step 2) to decrease the impurities therein to obtain flake raw powders.
4) subsequent processing step of flake raw powders: subjecting the flake raw powders obtained in step 3) to subsequent processing step to give tantalum powders for use in an electrolytic capacitor. Said subsequent processing step is one step or a combination of several steps selected from the group consisting of spherically granulation, heat treatment at high temperature in high vacuum, and deoxidation by magnesium.

In an embodiment, said raw tantalum powders are tantalum powders subjected to pre-treatment, said pre-treatment is one step or a combination of several steps selected from the group consisting of spherically granulation, heat treatment at high temperature in vacuum, and deoxidation by magnesium; preferably, a flame retardant is added during the pre-treatment. Said flame retardant is selected from the group consisting of substances containing phosphorus, nitrogen, boron (e.g. ammonium hexafluorophosphate, ammonium dihydrogen phosphate, nitrogen gas, boric acid).

In an embodiment, step 2) and step 3) can be repeated many times.

In an embodiment, said ball milling is wet ball milling.

Preferably, ethanol is used as a grinding aid (the concentration of ethanol preferably is 99.7%).

More preferably, said grinding aid further comprises a surfactant that can improve the dispersion effect of tantalum powders in the grinding aid. The said surfactant preferably is oleic acid, benzoic acid, butanone, polyethylene glycol, isopropanol, cyclohexanol, sodium hexametaphosphate or sodium tripolyphosphate. The said surfactant more preferably is oleic acid or benzoic acid;

More preferably, the added amount of said surfactant is 0.001-50% of the weight of tantalum powder, more preferably 5-50% of the weight of tantalum powder (e.g. 5%, 20% or 50%).

In an embodiment, the acid used for acid washing is an acid or a mixture of several acids selected from the group consisting of sulfuric acid, hydrochloric acid, and nitric acid, or the acid used for acid washing is an acidic mixture obtained by adding hydrogen peroxide or hydrofluoric acid into the acid selected from the group consisting of sulfuric acid, hydrochloric acid, and nitric acid.

Preferably, the acid used for acid washing is nitric acid in a concentration of 15-35% by weight (e.g. 20% nitric acid), or a mixed acid of nitric acid and hydrofluoric acid.

When tantalum metal is used as anodic material of an electrolytic capacitor, the finer the powders are, and thus the larger the specific surface area is, and thereby the higher the specific capacitance is. In order to achieve the aim that tantalum flake powders have low leakage current and high breakdown voltage, and also have high specific capacitance, it is necessary for the present invention to obtain tantalum powders having higher specific surface area. The inventors have found that according to the requirement for particle size and specific surface area of tantalum flake powders, the particle size of raw tantalum powders used for preparing tantalum flake powders is controlled, and the ratio of the average particle size of raw tantalum powders to the average particle size of tantalum flake powders is controlled in a reasonable range, which can improve the particle formation of product tantalum powders, thereby the capacitance value (CV/g) of product tantalum powders can be increased, and the properties of product tantalum powders, including leakage current and breakdown voltage, can be improved, thus the tantalum powders for use in an electrolytic capacitors with high reliability and high specific capacitance can be obtained.

In the present invention, said raw tantalum powders employed may be produced with tantalum-containing compounds, such as potassium fluorotantalate, tantalum pentachloride, tantalum pentoxide, by techniques known in the art, such as alkali metal reduction, alkaline-earth metal and hydride thereof reduction, hydrogen reduction, or produced by hydrogenation of tantalum ingots, tantalum rods and/or other tantalum materials. The particle size of raw tantalum powders has great effect on the properties of products. If the particle size of raw tantalum powders is too large, the particle size of flake raw powder obtained will be larger, so that the specific capacitance of product tantalum powders is reduced; if the raw tantalum powders are further made fine during preparing tantalum flake powders, which will lead to the increase of impurities, such as carbon, iron, nickel, chromium, in the tantalum powders, so that the leakage current of products is increased and the reliability thereof becomes low. At the same time, since the capacitors made with tantalum powders for use in an electrolytic capacitor with high reliability and high specific capacitance are formed under high voltage, raw materials that particle size is too small has no contribution to the specific capacitance of final tantalum powders, contrarily causes that the leakage current of tantalum powders is increased, thereby the reliability is lowered. Generally, the particle size of raw tantalum powders is controlled according to targeted particle size of flake raw powders required to obtain. The ratio of the particle size (the particle size of raw tantalum powders to the particle size of flake powders) is generally controlled between 0.5 and 25, preferably between 1.5 and 10, more preferably between 2 and 5.

In the present invention, in order to make the particle size distribution of raw tantalum powders more uniform and the purity thereof higher, raw tantalum powders can be tantalum powders subjected to one or more of the treatments selected from the group consisting of spherically granulation, heat treatment at high temperature in high vacuum, deoxidation by magnesium. During the treatment, a chemical substance that is beneficial to inhibit shrinkage and reduce loss of specific surface area during high temperature sintering of tantalum powders can be added at a desired ratio as flame retardant, for example, one or more of substances containing phosphorus, nitrogen or boron (e.g. ammonium hexafluorophosphate, ammonium dihydrogen phosphate, nitrogen gas, boric acid). Preferably, the added amount of the flame retardant is 20-200ppm, more preferably 40-100ppm, e.g. 40ppm, 60ppm, 100ppm.

In the present invention, said spherically granulation is carried out by heating raw tantalum powders in vacuum (preferably about 10-3 Pa vacuum) to 1000-1500□ (e.g. 1280°C, 1360°C, 1150°C, 1300°C, 1450°C, 1400°C, 1200°C) and keeping for 30-80 minutes (e.g. 40 minutes, 60 minutes), then mesh screening (e.g. 60 mesh or 50 mesh). Before spherically granulation, a flame retardant may be added into the raw tantalum powders, an appropriate amount of water is added (e.g. 20% of the weight of raw tantalum powders) to obtain a mixture, the mixture is vibrated, shook, screened by mesh, and pre-agglomerated into granules, then dried, and then pelletized.

In the present invention, the temperature of said heat treatment at high temperature in vacuum is controlled at 900-1600°C (e.g. 1280°C, 1360°C, 1150°C, 1300°C, 1450°C, 1400°C, 1200°C) and kept for 15-200 min (e.g. 40 min, 60 min). After sintering, the temperature is lowered, and passivation treatment is carried out to obtain tantalum agglomerate. Too high temperature of heat treatment causes too large particle size of raw tantalum powders, thereby affects subsequent preparation of tantalum flake powders, which is not beneficial to the increase of specific capacitance of products. Too low temperature of heat treatment causes the incomplete agglomeration of some ultrafine particles, thereby excessively milled tantalum flake powders are re-agglomerated during preparation of tantalum flake powders, and which correspondingly results in loss of some properties of products. Specific process of the heat treatment may be carried out according to the process described in CN102120258A.

In the present invention, said deoxidation is usually carried out in reductive atmosphere. Generally, a small amount of reductant having a greater affinity to oxygen than tantalum to oxygen, such as alkaline-earth metal, rare earth metal and hydride thereof, is blended into the tantalum powders. The most frequently used method consists of the steps of: blending metal magnesium powders into tantalum powders in an amount of 0.2-6.0% of the weight of tantalum powders, then placing in a crucible according to the process described in CN102120258A, heating in inert atmosphere, holding at 800-1000°C (e.g. 900°C) for 2-4 hours, vacuumizing and holding in vacuum for 2-4 hours, then cooling, and then passivating to give deoxidated tantalum powders, then taking the deoxidated tantalum powders out, washing with acid, washing with water, drying, and then mesh screening to obtain product tantalum powders. Said deoxidation by magnesium in the present invention may be carried out according to the method described above.

In the present invention, preparation of flaking tantalum powders is carried out by ball milling, preferably wet ball milling using a grinding aid, the milling is carried out continuously for 1-50 hours (e.g. 20 hours, 5 hours or 12 hours). The grinding aid is usually selected from liquid organic substances, preferably ethanol, and into which a surfactant that can improve the dispersion effect of tantalum powders in the grinding aid is added in an amount of 0.001-50% of the weight of tantalum powders (preferably 5-50% of the weight of tantalum powder, e.g. 5%, 20% or 50%) so as to improve the efficiency of milling and the particle formation of tantalum flake powder, reduce the contents of carbon and metal impurities in the tantalum powders. The surfactant is selected from, but not limited to, benzoic acid, oleic acid, cyclohexanol and so on.

In the present invention, the flake raw powders obtained by ball milling require to be washed with acid, the acid is a acidic mixed solution consisting of hydrogen peroxide, hydrofluoric acid and one acid or more acids selected from the group consisting of sulfuric acid, hydrochloric acid and nitric acid. Upon the completion of acid washing, the resultant is dried, then screened with mesh to obtain flake raw powders.

In the present invention, the flake raw powders may also be tantalum powders which are obtained by subjecting the tantalum powders obtained by preparation of tantalum flake powders and removal of impurities by acid washing to repeat the above steps many times.

In the present invention, the flake raw powders obtained in step 3) is subjected to subsequent processing step, such as one step or a combination of several steps selected from the group consisting of spherically granulation, heat treatment at high temperature in high vacuum, and deoxidation by magnesium, to obtain tantalum powders for use in an electrolytic capacitor with high reliability and high specific capacitance. In the subsequent processing step, a chemical substance that is beneficial to inhibit shrinkage and reduce loss of specific surface area during high temperature sintering of tantalum powders may be added at a desired ratio as flame retardant, for example, one or more of substances containing phosphorus, nitrogen or boron. The temperature of the heat treatment at high temperature in vacuum is controlled at a temperature of 1300-1600°C for 15-200 minutes. After sintering, the temperature is lowered, and passivation treatment is carried out to obtain tantalum agglomerate, which is then crushed. Specific process of the heat treatment may be carried out according to the process described in CN102120258A. The deoxidation is usually carried out in reductive atmosphere. Generally, a small amount of reductant having a greater affinity to oxygen than tantalum to oxygen, such as alkaline-earth metal, rare earth metal and hydride thereof, is blended into the tantalum powders. The most frequently used method consists of the steps of: blending metal magnesium powders into tantalum powders in an amount of 0.2-6.0% of the weight of tantalum powders, then placing in a crucible according to the process described in CN102120258A, heating in inert atmosphere, holding at 800-1000°Cfor 2-4 hours, vacuumizing and holding in vacuum for 2-4 hours, then cooling, and then passivating, to give deoxidated tantalum powders,. The deoxidated tantalum powders must be subjected to washing with acid, washing with water, drying, and then mesh screening.

According to the process of the present invention, tantalum flake powders having content of metal impurities ΣFe+Ni+Cr<60ppm and C<60ppm may be obtained, the anode of electrolytic capacitor made of thereof has specific capacitance of 5000-60000 µF•V/g and formation voltage of 50-270 V.

In the present invention, the unit "ppm" denotes "millionth" expressed by weight ratio, unless otherwise indicated.

In the present invention, "%" denotes weight percent, unless otherwise indicated.

In the present invention, when the particle size of powder is expressed using mesh, "+" or "-" before the mesh denotes "not passing through" or "passing through" screen mesh of said mesh, respectively. For example, "-60 mesh" denotes passing through the screen mesh with 60 mesh, while "+200 mesh" denotes not passing through the screen mesh with 200 mesh.

The analytic devices and their models and parameters in the present invention are shown in following table:

| Analytic item | Analytic device name | model | Producer |
|---|---|---|---|
| Average particle size (µm) | Malvern Laser particle size analyzer | Mastersizer 2000 | Malvern Instruments Ltd. |
| the content of C (ppm) | carbon - sulfur analyzer | LECO CS-406 | LECO |
| Fe+Ni+Cr (ppm) | Direct-reading spectrometer | GV-5 | BAIRD |
| CV | LCR precision instrument | HP-4284A | HP |
| Leakage current I | Leakage current measurement instrument | QE2621 | Quanzhou electronic instruments plant, Fujian, China |

### Advantageous effect of the present invention

The process of the present invention is simple and has good controllability, the tantalum flake powder obtained has low content of metal impurities, high specific surface area, and after agglomerated, have good flowability and moldability, have high specific capacitance, and when used under high voltage, have low leakage current and high breakdown voltage.

### Embodiments

The embodiments of the invention are described by combining the following examples. However, a person skilled in the art understands that the following examples are only intended to describe the invention, and shall not be regarded as defining the scope of the invention. When the particular conditions are not indicated in Examples, the invention is carried out according to the conventional conditions or according to conditions suggested by manufacturers. The reagents or apparatuses, the manufacturers of which are not indicated, are the conventional products that are commercially available.

### Example 1

The physical properties of raw tantalum powders used in sample A were shown in table 1, and the content of chemical impurities thereof was shown in table 2. The raw tantalum powders of sample A were sodium-reduced raw powders, which were treated by following method to obtain flake raw powders. The sodium reduction raw powders were blended with 100ppm phosphorus (i.e. ammonium dihydrogen phosphate, which is converted to 100ppm of phosphorus content), added with 20% (weight percent) H₂O, vibrated, shook and screened by mesh, pre-agglomerated into granules, then dried, heated in 10⁻³ Pa vacuum to 1280°C and held at this temperature for 40 min, then screened to pass through 60 mesh screen, the raw powders passing through 60 mesh screen were stirred and ball milled in a grinding aid (the grinding aid was a mixture obtained by adding oleic acid in an amount of 50% of the weight of the tantalum powders into ethanol (the concentration of ethanol is 99.7%)) for 20 hours to form flakes. The ball milled powders were washed with a mixed acid of HNO₃ and HF (the mixed acid was a mixture of 69% HNO₃ solution, 40% HF solution and water, the volume ratio of HNO₃ solution, HF solution and water is 4:1:20) to remove impurities, then dried, and then screened to obtain flake raw powders. The ratio of the particle size of the raw powders of Sample A to the particle size of the obtained flake raw powders was 2.48.

The physical properties of the flake raw powders obtained above were shown in Table 1, and the chemical properties thereof were shown in Table 2. The flake raw powders were heated in 10⁻³ Pa vacuum to 1150°C and held for 60 minutes, crushed by means of jaw crusher to -50 mesh, subjected to second heat treatment and deoxidation treatment, i.e., heated in 10⁻³ Pa vacuum to 1300°C and held for 60 minutes, crushed by means of jaw crusher to -50 mesh, subjected to deoxidation treatment at 900°C, washed with 20% (by weight) HNO₃ to remove magnesium oxide and residual magnesium, dried, and then screened to pass through 50 mesh screen to obtain sample A (i.e. product powders). The chemical impurities of sample A were shown in Table 2.

Sample A was pressed into pellets, the green density was 5.0 g/cm³, the weight of pellets was 0.15 g, and the pellets were measured according to the national standard (GBT 3137-2007 test method of tantalum powder electrical property). The pellets were separately sintered at 1300°C, 1350°C, 1400°C or 1450°C in 10⁻³ Pa vacuum oven for 30 minutes to form sintered pellets. The sintered pellets were formed in 0.01% (by weight) phosphoric acid solution at a voltage of 70 V to obtain an anode of capacitor. The electrical properties of the anode were measured and shown in Table 3.

Sample A was pressed into pellets, the green density was 5.0 g/cm³, the weight of pellets was 0.15 g. The pellets were measured according to the national standard (GBT 3137-2007 test method of tantalum powder electrical property). The pellets were sintered at 1350°C in 10⁻³ Pa vacuum oven for 30 minutes to form sintered pellets. The sintered pellets were formed in 0.01% (by weight) phosphoric acid solution at a voltage of 50V, 70V, or 100V to obtain an anode of capacitor. The electrical properties of the anode were measured and shown in Table 4.

**Table 1: physical properties of raw tantalum powders and flake raw powders of sample A**

| sample | Average particle size of raw tantalum powders (µm) | Average particle size of flake raw powders (µm) | Particle size ratio |
|---|---|---|---|
| Sample A | 10.7 | 4.3 | 2.49 |

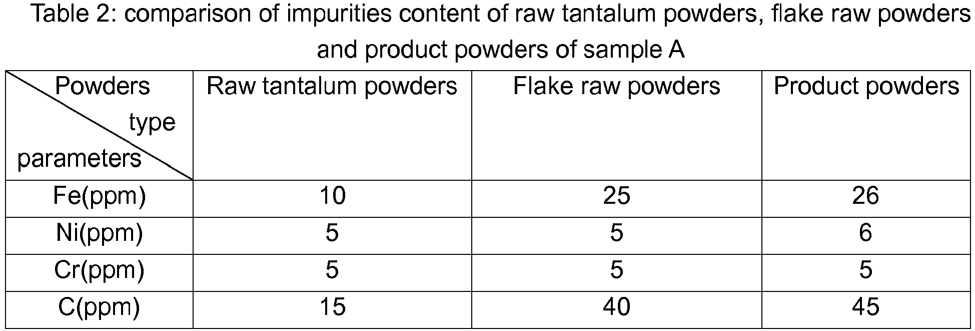

**Table 3: specific capacitance and leakage current of electrolytic capacitor anode obtained from sample A at different sintering conditions**

| Property parameters | Sintering temperature (°C/min) | | | |
|---|---|---|---|---|
| | 1300/30 | 1350/30 | 1400/30 | 1450/30 |
| Leakage current I (µA/g) | 18.2 | 14.6 | 12.5 | 10.6 |
| Capacitance value (µF•V/g) | 59930 | 58370 | 52443 | 48700 |

**Table 4: specific capacitance and leakage current of electrolytic capacitor anode obtained from sample A at different formation voltage**

| Property parameters | formation voltage (V) | | |
|---|---|---|---|
| | 50 | 70 | 100 |
| Leakage current I (µA/g) | 8.2 | 14.6 | 22.8 |
| Capacitance value (µF•V/g) | 64730 | 58370 | 50420 |

### Example 2

The physical properties of raw tantalum powders used in sample B were shown in table 5, and the content of chemical impurities thereof was shown in table 6. The raw tantalum powders of sample B were sodium-reduced raw powders, which were treated by following method to obtain flake raw powder. The sodium reduction raw powders were blended with 100ppm phosphorus (i.e. ammonium dihydrogen phosphate, which is converted to 100ppm of phosphorus content), heated in 10⁻³ Pa vacuum to 1360°C and held at this temperature for 40 minutes, screened to pass through 60 mesh screen, subjected to deoxidation treatment at 900°C, then washed with 20% (by weight) HNO₃ to remove magnesium oxide and residual magnesium, dried, and then screened to pass through 50 mesh screen. The powders passing through 50 mesh screen were stirred and ball milled in a grinding aid (the grinding aid was a mixture obtained by adding oleic acid of 5% (by weight) of the weight of tantalum powders into ethanol (the concentration of ethanol was 99.7%) for 5 hours to form flakes. The ball milled powder were washed with a mixed acid of HNO₃ and HF (the mixed acid was a mixed acid of 69% HNO₃ solution, 40% HF solution and water, the volume ratio of HNO₃ solution, HF solution and water is 4:1:20) to remove metal impurities, then dried, and then screened to obtain flake raw powders. The ratio of the particle size of the raw powders of Sample B to the particle size of the obtained flake raw powders was 4.89.

The physical properties of the flake raw powders obtained above were shown in Table 5, and the chemical properties thereof were shown in Table 6. The flake raw powders were heated in 10⁻³ Pa vacuum to 1300°C and held for 60 minutes, crushed by means of jaw crusher to -50 mesh, subjected to second heat treatment and deoxidation treatment, i.e., heated in 10⁻³ Pa vacuum to 1450°C and held for 60 minutes, crushed by means of jaw crusher to -50 mesh, subjected to deoxidation treatment at 900°C, washed with 20% (by weight) HNO₃ to remove magnesium oxide and residual magnesium, dried, and then screened to pass through 50 mesh screen to obtain sample B (i.e. product powders). The content of chemical impurities of sample B was shown in Table 6.

Sample B was pressed into pellets, the green density was 5.0 g/cm³, the weight of pellets was 0.15 g. The pellets were measured according to the national standard (GBT 3137-2007 test method of tantalum powder electrical property). The pellets were separately sintered at 1450°C, 1500°C, 1550°C or 1600°C in 10⁻³ Pa vacuum oven for 30 minutes to form sintered pellets. The sintered pellets were formed in 0.01% (by weight) phosphoric acid solution at a voltage of 140 V to obtain an anode of capacitor. The electrical properties of the anode were measured and shown in Table 7.

Sample B was pressed into pellets, the green density was 5.0 g/cm³, the weight of pellets was 0.15 g. The pellets were measured according to the national standard (GBT 3137-2007 test method of tantalum powder electrical property). The pellets were sintered at 1500°C in 10⁻³ Pa vacuum oven for 30 minutes to form sintered pellets. The sintered pellets were formed in 0.01 % (by weight) phosphoric acid solution at a voltage of 100V, 140V or 200V to obtain an anode of capacitor. The electrical properties of the anode were measured and shown in Table 8.

**Table 5: physical properties of raw tantalum powders and flake raw powders of sample B**

| sample | Average particle size of raw tantalum powder (µm) | Average particle size of flake raw powder (µm) | Particle size ratio |
|---|---|---|---|
| Sample B | 35.2 | 7.2 | 4.89 |

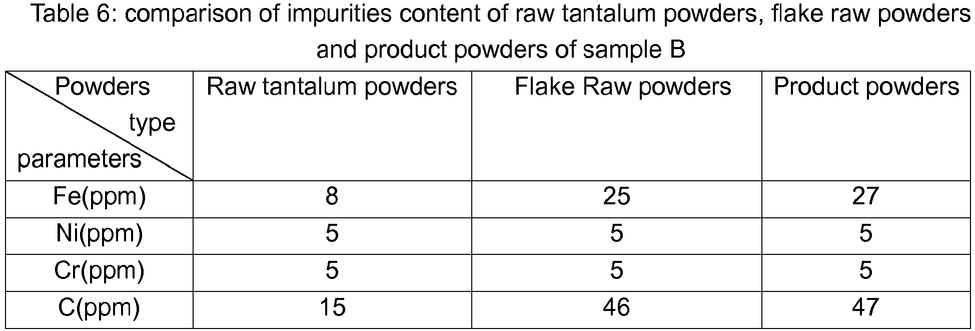

**Table 7: specific capacitance and leakage current of electrolytic capacitor anode obtained from sample B at different sintering conditions**

| Property parameters | Sintering temperature (°C/min) | | | |
|---|---|---|---|---|
| | 1450/30 | 1500/30 | 1550/30 | 1600/30 |
| Leakage current I (µA/g) | 6.1 | 5.8 | 3.3 | 3.0 |
| Capacitance value (µF•V/g) | 28500 | 21727 | 19888 | 17800 |

**Table 8: specific capacitance and leakage current of electrolytic capacitor anode obtained from sample B at different formation voltage**

| Property parameters | formation voltage (V) | | |
|---|---|---|---|
| | 100 | 140 | 200 |
| Leakage current I (µA/g) | 4.6 | 5.8 | 7.3 |
| Capacitance value (µF•V/g) | 26460 | 21727 | 16800 |

### Example 3

Raw tantalum powders used in sample C and sample D were sodium-reduced raw powders, physical properties thereof were shown in table 9 and the content of chemical impurities thereof was shown in table 10. The raw tantalum powders were treated by following method to obtain flake raw powders. The sodium reduction raw powders were blended with 100ppm phosphorus (i.e. ammonium dihydrogen phosphate, which is converted to 100ppm of phosphorus content), added with 20% (weight percent) H₂O, vibrated shook and screened by mesh, pre-pelletized into granules, dried, heated in 10⁻³ Pa vacuum to 1360°C and held at this temperature for 40 minutes, then screened to pass through 60 mesh screen, and then subjected to deoxidation treatment at 900°C, washed with 20% (by weight) HNO₃ to remove magnesium oxide and residual magnesium, dried, screened to pass through 50 mesh screen. The powders passing through 50 mesh screen were stirred and ball milled, wherein: sample C was ball milled in a grinding aid (the grinding aid was a mixture obtained by adding oleic acid of 20% (by weight) of the weight of tantalum powders into ethanol (the concentration of ethanol was 99.7%) for 12 hours to form flakes; sample D was ball milled in a grinding aid (the grinding aid was a mixture obtained by adding benzoic acid of 20% (by weight) of the weight of tantalum powders into ethanol (the concentration of ethanol was 99.7%) for 12 hours to form flakes. The ball milled powder was separately washed with a mixed acid of HNO₃ and HF (the mixed acid was a mixture of 69% HNO₃ solution, 40% HF solution and water, the volume ratio of HNO₃ solution, HF solution and water is 4:1:20) to remove metal impurities, dried and then screened to obtain flake raw powders. The ratio of the particle size of the raw powders of Sample C to the particle size of the obtained flake raw powders was 4.32. The ratio of the particle size of the raw powders of Sample D to the particle size of the obtained flake raw powders was 4.10.

The physical properties of the flake raw powders obtained above were shown in Table 9, and the chemical properties thereof were shown in Table 10. The flake raw powders were separately heated in 10⁻³ Pa vacuum to 1200°C and held for 60 minutes, crushed by means of jaw crusher to -50 mesh, then subjected to second heat treatment and deoxidation treatment, i.e., heated in 10⁻³ Pa vacuum to 1400°C and held for 60 minutes, crushed by means of jaw crusher to -50 mesh, subjected to deoxidation treatment at 900°C, washed with 20% (by weight) HNO₃ to remove magnesium oxide and residual magnesium, dried, and then screened to pass through 50 mesh screen to obtain sample C and sample D (i.e. product powders). The contents of chemical impurities of sample C and sample D were shown in Table 10.

Sample C and sample D were separately pressed into pellets, the green density was 5.0 g/cm³, the weight of pellets was 0.15 g. The pellets were separately measured according to the national standard (GBT 3137-2007 test method of tantalum powder electrical property). The pellets were separately sintered at 1400°C, 1450°C or 1500°C in 10⁻³ Pa vacuum oven for 30 minutes to form sintered pellets. The sintered pellets were separately formed in 0.01% (by weight) phosphoric acid solution at a voltage of 100 V to obtain two anodes of capacitors. The electrical properties of the two anodes were measured and shown in Table 11.

Sample C and sample D were separately compacted into pellets, the green density was 5.0 g/cm³, the weight of pellets was 0.15 g. The pellets were separately measured according to the national standard (GBT 3137-2007 test method of tantalum powder electrical property). The pellets were separately sintered at 1400°C in 10⁻³ Pa vacuum oven for 30 minutes to form sintered pellets. The sintered pellets were energized in 0.01% (by weight) phosphoric acid solution at a voltage of 70V, 100V or 140V to obtain two anodes of capacitors. The electrical properties of the two anodes were measured and shown in Table12.

**Table 9: physical properties of raw tantalum powders and flake raw powders of sample C, sample D or sample E**

| sample | Average particle size of raw tantalum powders (µm) | Average particle size of flake raw powders (µm) | Particle size ratio |
|---|---|---|---|
| Sample C | 22.2 | 5.14 | 4.32 |
| Sample D | 22.2 | 5.42 | 4.10 |
| Sample E (do not belong to the present invention | 128.6 | 5.02 | 25.62 |

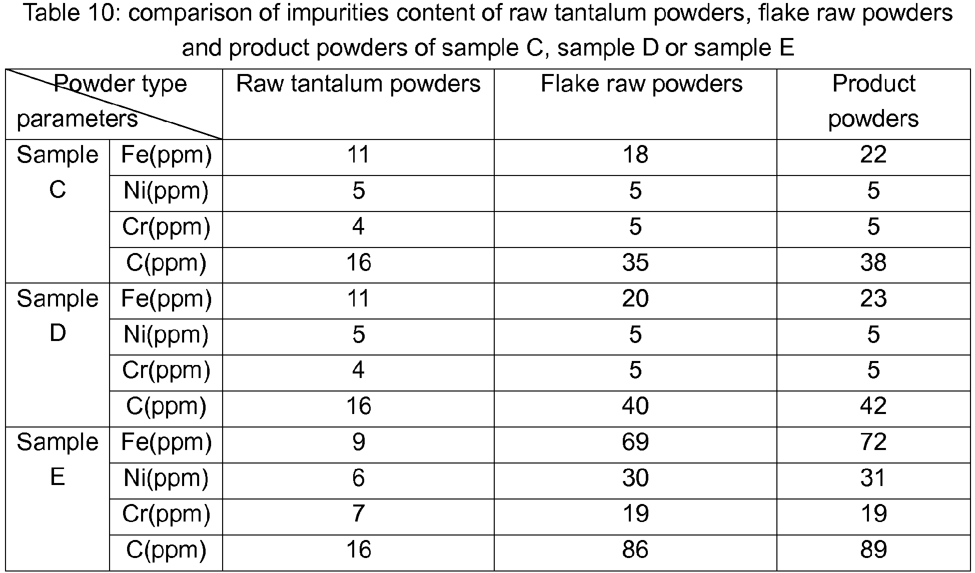

**Table 11: specific capacitance and leakage current of electrolytic capacitor anode obtained from samples C, D or E at different sintering conditions**

| Sample number | Property parameters | Sintering temperature (°C/min) | | | |
|---|---|---|---|---|---|
| | | 1400/30 | 1450/30 | 1500/30 | 1550/30 |
| C | Leakage current I (µA/g) | 13.3 | 8.7 | 6.5 | 5.0 |
| | Capacitance value (µF•V/g) | 38526 | 36150 | 33653 | 28700 |
| D | Leakage current I (µA/g) | 15.1 | 9.1 | 7.4 | 6.1 |
| | Capacitance value (µF•V/g) | 37320 | 35520 | 32450 | 26980 |
| E | Leakage current I (µA/g) | 28.7 | 23.3 | 18.4 | 6.8 |
| | Capacitance value (µF•V/g) | 31585 | 23551 | 19535 | 22401 |

**Table 12: specific capacitance and leakage current of electrolytic capacitor anode obtained from samples C, D or E at different formation voltage**

| Sample number | Property parameter | formation voltage (V) | | |
|---|---|---|---|---|
| | | 70 | 100 | 140 |
| C | Leakage current I (µA/g) | 8.1 | 13.3 | 17.8 |
| | Capacitance value (µF·V/g) | 40930 | 38526 | 23420 |
| D | Leakage current I (µA/g) | 8.9 | 15.1 | 19.8 |
| | Capacitance value (µF·V/g) | 39092 | 37320 | 22054 |
| E | Leakage current I (µA/g) | 12.3 | 18.7 | 23.8 |
| | Capacitance value (µF·V/g) | 37020 | 36585 | 19887 |

### Comparative example 1

Sample E was produced by the process for producing tantalum flake powders described in US5580367. Sodium-reduced raw powders were subjected to pass through 60 mesh screen, the physical properties of the employed sodium-reduced raw powders were shown in Table 9, and the chemical properties thereof were shown in Table 10. Screened sodium reduction raw powders, which was not subjected heat treatment, were directly stirred and ball milled in a grinding aid (the grinding aid was a mixture obtained by adding oleic acid of 20% (by weight) of the weight of tantalum powder into ethanol (the concentration of ethanol was 99.7%) for 12 hours to form flakes. It was found by analysis that after ball milled, the particle size was 30.6 µm, ball milling was continuously carried out for 36 hours. The ball milled powders was washed with a mixed acid of HNO₃ and HF (the mixed acid was a mixture of 69% HNO₃ solution, 40% HF solution and water, the volume ratio of HNO₃ solution, HF solution and water is 4:1:20) to remove metal impurities, dried with and then screened to obtain flake raw powders of sample E. The ratio of the particle size of the raw powders of Sample E to the particle size of the obtained flake raw powders was 4.32.

The physical properties of the flake raw powders obtained above were shown in Table 9, and the chemical properties thereof were shown in Table 10. The flake raw powders of sample E were heated in a sealed container to about 850°C, hydrogen was introduced to lower the temperature to room temperature and to carry out hydrogenation. The hydrogenated flake raw powders were impacted by jet mill into small flakes. The small flakes were heated in 10⁻³ Pa vacuum to 1200°C and held for 60 minutes, crushed by means of jaw crusher to -50 mesh, subjected to second heat treatment and deoxidation treatment, i.e., heated in 10⁻³ Pa vacuum to 1400°C and held for 60 minutes, crushed by means of jaw crusher to -50 mesh, subjected to deoxidation treatment at 900°C, washed with 20% (by weight) HNO₃ to remove magnesium oxide and residual magnesium, dried, and then screened to pass through 50 mesh screen to obtain sample E (i.e. product powders). The content of chemical impurities of sample E was shown in Table 10.

Like sample C and sample D, sample E was pressed into pellets, the green density was 5.0 g/cm³, the weight of pellets was 0.15 g. The pellets were measured according to the national standard (GBT 3137-2007 test method of tantalum powder electrical property). The pellets were separately sintered at 1400°C, 1450°C or 1500°C in 10⁻³ Pa vacuum oven for 30 minutes to form sintered pellets. The sintered pellets were formed in 0.01% (by weight) phosphoric acid solution at a voltage of 100 V to obtain an anode of capacitor. The electrical properties of the anode were measured and shown in Table 11.

Like sample C and sample D, sample E was pressed into pellets, the green density was 5.0 /cm³, the weight of pellets was 0.15 g. The pellets were measured according to the national standard (GBT 3137-2007 test method of tantalum powder electrical property). The pellets were sintered at 1400°C in 10⁻³ Pa vacuum oven for 30 minutes to form sintered pellets. The sintered pellets were formed in 0.01% (by weight) phosphoric acid solution at a voltage of 100V, 140V or 200V to obtain an anode of capacitor. The electrical properties of the anode were measured and shown in Table12.

It can be seen by comparison that the impurities amounts of samples C and D are obviously less than those of sample E, the leakage current of electrolytic capacitor anode obtained from sample C or sample D is obviously less than that of the anode prepared from sample E, while the specific capacitance of the electrolytic capacitor anode obtained from sample C or sample D is obviously higher than that of the anode prepared from sample E.

It is clearly seen from the comparative data in Tables 1-12 that the smaller the average particle size of raw materials is, the smaller the average particle size of the tantalum flake powders obtained after ball milled is. The ratio of the particle size of raw materials to the particle size of flake powders was controlled between 2 and 5, the tantalum powders obtained are used to prepare the anode of electrolytic capacitor, which has higher specific capacitance and lower leakage current.

It can be seen from above examples that the anode of electrolytic capacitor anode manufactured by the tantalum powder obtained in the present invention has high specific capacitance and low leakage current at high sintering temperature and under high formation voltage.

## Claims

1. A process for preparing tantalum powders for use in an electrolytic capacitor wherein said tantalum powder is a tantalum flake powder having a content of metal impurities ΣFe+Ni+Cr<60ppm and a content of C <60ppm and having a tantalum flake powder, wherein the content of metal impurities ΣFe+Ni+Cr<60ppm, the content of C <60ppm; the specific capacitance value thereof is 5000-60000 µF•V/g at a formation voltage of 50-270 V, comprising the steps of:
1) preparation of raw tantalum powders: providing raw tantalum powders having suitable average particle size according to the requirement for targeted average particle size of tantalum flake powders, wherein the ratio of the average particle size of raw tantalum powders to the average particle size of tantalum flake powders is 2-5;
2) preparation of tantalum flake powders: processing the raw tantalum powders into flaky shape to obtain tantalum flake powders, preferably with a processing method comprising: ball milling, pounding or squashing, more preferably with ball milling;
3) removal of impurities by acid washing: acid washing the tantalum flake powders obtained in step 2) to decrease the impurities therein to obtain flake raw powders;
4) subsequent processing step of flake raw powders: subjecting the flake raw powders obtained in step 3) to subsequent processing step to give tantalum powders for use in an electrolytic capacitor, said subsequent processing step is one step or a combination of several steps selected from the group consisting of spherically granulation, heat treatment at high temperature in high vacuum, and deoxidation by magnesium.

2. The process according to claim 1, wherein said raw tantalum powders are tantalum powders subjected to pre-treatment, said pre-treatment is one step or a combination of several steps selected from the group consisting of spherically granulation, heat treatment at high temperature in vacuum, and deoxidation by magnesium;
preferably, a flame retardant is added during the pre-treatment, said flame retardant is selected from the group consisting of substances containing phosphorus, nitrogen, boron (e.g. ammonium hexafluorophosphate, ammonium dihydrogen phosphate, nitrogen gas, boric acid).

3. The process according to claim 1, wherein step 2) and step 3) can be repeated many times.

4. The process according to claim 1, wherein said ball milling is wet ball milling, preferably, ethanol is used as a grinding aid;
more preferably, said grinding aid further comprises a surfactant that can improve the dispersion effect of tantalum powders in the grinding aid, said surfactant preferably is oleic acid, benzoic acid, butanone, polyethylene glycol, isopropanol, cyclohexanol, sodium hexametaphosphate or sodium tripolyphosphate, the said surfactant more preferably is oleic acid or benzoic acid;
more preferably, the added amount of said surfactant is 0.001-50% of the weight of tantalum powder, more preferably 5-50% of the weight of tantalum powder (e.g. 5%, 20% or 50%).

5. The process according to claim 1, wherein the acid used for acid washing is an acid or a mixture of several acids selected from the group consisting of sulfuric acid, hydrochloric acid, and nitric acid, or the acid used for acid washing is a acidic mixture obtained by adding hydrogen peroxide or hydrofluoric acid into the acid selected from the group consisting of sulfuric acid, hydrochloric acid, and nitric acid;
preferably, the acid used for acid washing is nitric acid in a concentration of 15-35% by weight, or a mixed acid of nitric acid and hydrofluoric acid.

## Patentansprüche

1. Verfahren zur Herstellung von Tantalpulvern zur Verwendung in einem Elektrolytkondensator, wobei das Tantalpulver ein Tantalflockenpulver ist, das einen Gehalt an Metallverunreinigungen ∑Fe+Ni+Cr < 60 ppm und einem Gehalt an C < 60 ppm aufweist und ein Tantalflockenpulver aufweist, wobei der Gehalt an Metallverunreinigungen ∑Fe+Ni+Cr < 60 ppm ist, der Gehalt an C < 60 ppm ist; wobei der spezifische Kapazitätswert davon 5000-60.000 µF·V/g bei einer Formierungsspannung von 50-270 V ist, wobei das Verfahren die folgenden Schritte umfasst:
1) Herstellen von rohen Tantalpulvern: Bereitstellen von rohen Tantalpulvern, die eine geeignete durchschnittliche Teilchengröße gemäß dem Erfordernis für eine abgezielte durchschnittliche Teilchengröße von Tantalflockenpulvern aufweisen, wobei das Verhältnis der durchschnittlichen Teilchengröße von rohen Tantalpulvern zu der durchschnittlichen Teilchengröße von Tantalflockenpulvern 2-5 ist;
2) Herstellen von Tantalflockenpulvern: Verarbeiten der rohen Tantalpulver zu einer Flockenform, um Tantalflockenpulver zu erhalten, vorzugsweise mit einem Verarbeitungsverfahren, umfassend: Kugelmahlen, Stampfen oder Quetschen, mehr bevorzugt mit Kugelmahlen;
3) Entfernen von Verunreinigungen durch Säurewaschen: Säurewaschen der in Schritt 2) erhaltenen Tantalflockenpulver, um die Verunreinigungen darin zu verringern, um rohe Flockenpulver zu erhalten;
4) Folgeverarbeitungsschritt an rohen Flockenpulvern: Unterziehen der in Schritt 3) erhaltenen rohen Flockenpulver einem Folgeverarbeitungsschritt, um Tantalpulver zur Verwendung in einem Elektrolytkondensator zu ergeben, wobei der Folgeverarbeitungsschritt ein Schritt oder eine Kombination von mehreren Schritten ist, die aus der Gruppe bestehend aus Kugelgranulierung, Wärmebehandlung bei hoher Temperatur in Hochvakuum und Desoxidation durch Magnesium ausgewählt sind.

2. Verfahren nach Anspruch 1, wobei die rohen Tantalpulver Tantalpulver sind, die einer Vorbehandlung unterzogen wurden, wobei die Vorbehandlung ein Schritt oder eine Kombination von mehreren Schritten ist, die aus der Gruppe bestehend aus Kugelgranulierung, Wärmebehandlung bei hoher Temperatur in Vakuum und Desoxidation durch Magnesium ausgewählt sind;
wobei vorzugsweise ein Flammschutzmittel während der Vorbehandlung zugegeben wird, wobei das Flammschutzmittel aus der Gruppe bestehend aus Substanzen, die Phosphor, Stickstoff, Bor enthalten (z. B.
Ammoniumhexafluorphosphat, Ammoniumdihydrogenphosphat, Stickstoffgas, Borsäure), ausgewählt ist.

3. Verfahren nach Anspruch 1, wobei Schritt 2) und Schritt 3) häufig wiederholt werden können.

4. Verfahren nach Anspruch 1, wobei das Kugelmahlen Nasskugelmahlen ist, vorzugsweise wobei Ethanol als ein Mahlhilfsmittel verwendet wird;
mehr bevorzugt wobei das Mahlhilfsmittel weiterhin ein Tensid umfasst, das das die Dispersionswirkung von Tantalpulvern in dem Mahlhilfsmitteln verbessern kann, wobei das Tensid vorzugsweise Ölsäure, Benzoesäure, Butanon, Polyethylenglykol, Isopropanol, Cyclohexanol, Natriumhexametaphosphat oder Natriumtripolyphosphat ist, wobei das Tensid mehr bevorzugt Ölsäure oder Benzoesäure ist;
mehr bevorzugt wobei die zugegebene Menge an Tensid 0,001-50 % des Gewichts des Tantalpulvers, mehr bevorzugt 5-50 % des Gewichts des Tantalpulvers (z. B. 5 %, 20 % oder 50 %) ist.

5. Verfahren nach Anspruch 1, wobei die für das Säurewaschen verwendete Säure eine Säure oder ein Gemisch von mehreren Säuren ist, die aus der Gruppe bestehend aus Schwefelsäure, Salzsäure und Salpetersäure ausgewählt ist, oder die für das Säurewaschen verwendete Säure ein saures Gemisch ist, das durch Zugeben von Wasserstoffperoxid oder Fluorwasserstoffsäure in die Säure, die aus der Gruppe bestehend aus Schwefelsäure, Salzsäure und Salpetersäure ausgewählt ist, erhalten wird;
vorzugsweise wobei die für das Säurewaschen verwendete Säure Salpetersäure in einer Konzentration von 15-35 Gew.-% oder eine Mischsäure von Salpetersäure und Fluorwasserstoffsäure ist.

## Revendications

1. Procédé de préparation de poudres de tantale à utiliser dans un condensateur électrolytique, dans lequel ladite poudre de tantale est une poudre de tantale pailletée comportant une teneur d'impuretés métalliques ∑Fe+Ni+Cr<60 ppm et une teneur de C <60 ppm et comportant une poudre de tantale pailletée, dans lequel la teneur en impuretés métalliques ∑Fe+Ni+Cr<60 ppm, la teneur de C <60 ppm ; sa valeur de capacité spécifique est de 5000-6000 µF·V/g sous une tension de formation de 50-270 V, comprenant les étapes consistant à :
1) préparer des poudres de tantale brutes : fournir des poudres de tantale brutes comportant une taille particulaire moyenne appropriée conforme aux critères de taille particulaire moyenne ciblée applicables aux poudres de tantale pailletées, dans lequel le ratio de la taille particulaire moyenne des poudres de tantale brutes par rapport à la taille particulaire moyenne des poudres de tantale pailletées est de 2:5 ;
2) préparer des poudres de tantale pailletées : traiter les poudres de tantale brutes en forme de paillette pour obtenir des poudres de tantale pailletées, de préférence en faisant appel à une méthode de traitement comprenant : le broyage par boulet, le martèlement ou l'écrasement, plus préférablement le broyage par boulet ;
3) enlever les impuretés par lavage à l'acide : laver à l'acide les poudres de tantale pailletées obtenues à l'étape 2) pour réduire les impuretés qui y sont contenues pour obtenir des poudres brutes pailletées ;
4) étape de traitement ultérieure des poudres brutes pailletées : soumettre les poudres brutes pailletées obtenues à l'étape 3) à une étape de traitement ultérieure pour produire des poudres de tantale à utiliser dans un condensateur électrolytique, ladite étape de traitement ultérieure est une étape ou une combinaison de plusieurs étapes sélectionnées dans le groupe consistant en granulation sphérique, traitement thermique à température élevée sous vide poussé et désoxydation par magnésium.

2. Procédé selon la revendication 1, dans lequel lesdites poudres de tantale brutes sont des poudres de tantale soumises à un traitement préalable, ledit traitement préalable est une étape ou une combinaison de plusieurs étapes sélectionnées dans le groupe consistant en granulation sphérique, traitement thermique à température élevée sous vide et désoxydation par magnésium ;
de préférence, un retardateur de feu est ajouté au cours du traitement préalable, ledit retardateur de feu est sélectionné dans le groupe constitué de substances contenant du phosphore, de l'azote, du bore (p. ex., de l'hexaflurophosphate d'ammonium, du phosphate de monoammonium, de l'azote gazeux, de l'acide borique).

3. Procédé selon la revendication 1, dans lequel l'étape 2) et l'étape 3) peuvent être reprises plusieurs fois.

4. Procédé selon la revendication 1, dans lequel ledit broyage par boulet est un broyage par boulet à l'état humide, de préférence, de l'éthanol est utilisé en tant qu'adjuvant de broyage ;
plus préférablement, ledit adjuvant de broyage comprend en outre un tensioactif qui peut améliorer l'effet de dispersion des poudres de tantale dans l'adjuvant de broyage, ledit tensioactif est de préférence de l'acide oléique, du butanone, du glycol polyéthylénique, de l'isopropanol, du cyclohexanol, de l'hexamétaphosphate de sodium ou du tripolyphosphate de sodium, ledit tensioactif plus préférablement est de l'acide oléique ou de l'acide benzoïque ;
plus préférablement, le montant ajouté dudit tensioactif correspond à 0,001-50 % du poids de la poudre de tantale, plus préférablement correspondant à 5-50 % du poids de la poudre de tantale (p. ex., 5 %, 20 % ou 50 %).

5. Procédé selon la revendication 1, dans lequel l'acide utilisé pour effectuer un lavage à l'acide est un acide ou un mélange de plusieurs acides sélectionnés dans le groupe constitué d'acide sulfurique, d'acide hydrochlorique et d'acide nitrique, ou l'acide utilisé pour le levage à l'acide est un mélange acide obtenu en ajoutant du peroxyde d'hydrogène ou de l'acide hydrofluorique dans l'acide sélectionné dans le groupe constitué d'acide sulfurique, d'acide hydrochlorique et d' acide nitrique ;
de préférence, l'acide utilisé pour effectuer le levage à l'acide est de l'acide nitrique dans une concentration de 15-35 % en poids, ou un acide mixte constitué d'acide nitrique et d'acide hydrofluorique.
